# EUROPÄISCHE PATENTSCHRIFT

(11) **EP 0 626 531 B1**
(45) Veröffentlichungstag und Bekanntmachung des Hinweises auf die Patenterteilung: **04.03.1998**
(21) Anmeldenummer: 94107765.3
(22) Anmeldetag: 19.05.1994
(51) Int. Cl.: F16K 3/26, B62D 6/02, F16K 31/363

(54) **Ventilanordnung**
Valve arrangement
Arrangement de soupape

(30) Priorität: 28.05.1993 DE 4317785; 16.10.1993 DE 4335377
(43) Veröffentlichungstag der Anmeldung: 30.11.1994
(73) Patentinhaber: LuK Fahrzeug-Hydraulik GmbH & Co. KG, D-61352 Bad Homburg (DE)
(72) Erfinder: Nguyen, Van Doan, D-60437 Frankfurt (DE); Gong, Yuejin, D-61350 Bad Homburg (DE); Körtge, Randolf, D-61250 Usingen (DE); Lauth, Hans-Jürgen, D-61250 Usingen (DE); Overdiek, Gerhard, D-61381 Friedrichsdorf (DE); Parsch, Willi, D-64404 Bickenbach (DE); Nied-Menninger, Thomas, D-61250 Usingen (DE)
(74) Vertreter: Gleiss, Alf-Olav, Dr.jur. Dipl.-Ing.

(56) Entgegenhaltungen:
- DE-A- 3 701 271
- DE-C- 241 930
- FR-A- 2 425 005
- GB-A- 2 067 269
- US-A- 3 314 495
- US-A- 4 311 161

## Beschreibung

Die Erfindung betrifft eine Ventilanordnung mit einem Stromregelventil, das einen gegen die Kraft einer Feder in einem axialen Innenraum verschiebbar geführten Ventilkolben aufweist und einer Hauptstromdrossel. Eine solche Ventilanordnung ist aus der US-A-3 314 495 bekannt.

Es ist bekannt, Stromregelventile enthaltende Ventilanordnungen, beispielsweise in Lenkhilfpumpen für Kraftfahrzeuge einzusetzen, die dafür sorgen, daß ein an die Pumpe angeschlossener Verbraucher mit einem gleichmäßigen Ölstrom beaufschlagt wird. Dies ist insbesondere wichtig, da beispielsweise bei einer schnellen Autobahnfahrt mit geringer Lenkbetätigung die Lenkhilfe nur einen geringen Ölstrom benötigt, jedoch beispielsweise bei einem plötzlich platzenden Reifen sofort zum Lenkungsausgleich eine große Menge Öl benötigt wird. Diese Ölmengen müssen unabhängig von der Drehzahl der Pumpe und damit der Förderleistung der Pumpe zur Verfügung stehen. Es ist bereits vorgeschlagen worden, zur Regulierung des Ölflusses sogenannte Hauptstromdrosseln einzusetzen, die in einer zu einem Verbraucher führenden Arbeitsdie in einer zu einem Verbraucher führenden Arbeitsleitung für einen konstanten Öldurchfluß sorgen sollen. Diese Hauptstromdrosseln arbeiten dabei mit einem verstellbaren Schieber zusammen, so daß ein bestimmter Ölstrom eingestellt werden kann. Hierbei ist jedoch nachteilig, daß diese Schieber ein bestimmtes Mindestspiel aufweisen müssen, damit sie sich problemlos verstellen können. Dieses Spiel führt jedoch zu einem Leckölverlust und verringert damit den hydraulischen Wirkungsgrad der Pumpe. Insbesondere im Leerlauf macht sich diese Leckage negativ bemerkbar, wenn die Pumpe sowieso wenig Öl fördert.

Es ist daher Aufgabe der Erfindung, eine Ventilanordnung der gattungsgemäßen Art zu schaffen, mit der in einfacher Weise eine Stromregelung durchgeführt werden kann und das Auftreten von Lecköl im Leerlauf stark verringert wird.

Diese Aufgabe wird bei der Ventilanordnung der eingangs genannten Art mit Hilfe der in Anspruch 1 genannten Merkmale gelöst. Dadurch, daß die Hauptstromdrossel innerhalb des axialen Innenraums des Stromregelventils angeordnet ist und dort mit dem Ventilkolben zusammenwirkt, wobei der Ventilkolben einen stirnseitigen Bereich aufweist, der einerseits einen von dem Innenraum abgehenden zu einem Ansaugbereich einer hydraulischen Fördereinrichtung führenden Kanal übergreift und der andererseits ein Sitzventil zur Abdichtung des Kanals ausbildet, wird das Auftreten von Lecköl weitgehend vermieden, da der zu regelnde Volumenstrom durch die Hauptstromdrossel reduziert zum Verbraucher strömt und bei dieser Anordnung der Ventilkolben unterhalb des Stromregelöffnungsdrucks über einen Sitz geschlossen ist. Somit wird insbesondere das Auftreten von Lecköl unterhalb des Abregelstroms vermieden.

Es wird erreicht, daß der Ventilkolben unterhalb des vom Lenksystem benötigten Volumenstroms den Rückführungskanal zu dem Ansaugbereich der Pumpe dichtend abschließt, während der Systemdruck zu dem Verbraucher konstant aufrechterhalten werden kann, da keine Leckölverluste von der Pumpenseite in den Rückführungskanal hinein auftreten können.

In weiterer bevorzugter Ausgestaltung des Stromregelventils ist vorgesehen, daß der Ventilkolben innerhalb des den Rückführungskanal übergreifenden Bereichs einen Hohlraum aufweist, der über wenigstens eine Öffnung mit einem Ringraum in Verbindung steht, von dem ein Kanal zu dem Verbraucher führt, und daß der Hohlraum vorteilhafterweise eine axiale Durchgangsöffnung aufweist, durch die eine axiale Verlängerung der Hauptstromdrossel greift. Hierdurch wird sehr vorteilhaft erreicht, daß durch diese direkte Kopplung des Ventilkolbens und der Hauptstromdrossel eine sehr kurze Baulänge des gesamten Stromregelventils möglich ist. Damit wird auch nur ein reduzierter Einbauraum für das Stromregelventil in der Lenkhilfpumpe benötigt.

In weiterer bevorzugter Ausgestaltung der Erfindung ist vorgesehen, daß der Ringraum wenigstens eine Öffnung zu einem Federraum besitzt, der mit einem Druckbegrenzungsventil in Verbindung steht, wobei dieses Druckbegrenzungsventil bevorzugterweise außerhalb des Ventilkolbens und damit außerhalb des bereits erwähnten axialen Innenraums liegt. Hiermit wird sehr vorteilhafterweise erreicht, daß der Ventilkolben keinen zweiten Bund zum Tank benötigt und somit die Möglichkeit des Auftretens einer zusätzlichen Leckage vermieden wird. Darüber hinaus kann so in einfacher Weise eine Einstellung des Druckbegrenzungsventils unabhängig vom Ventilkolben erfolgen.

In bevorzugter Ausgestaltung der Erfindung ist vorgesehen, daß die Hauptstromdrossel ein gegen die Kraft einer Feder axial bewegbares Teil besitzt, das auf einer die Hauptstromdrossel und den Hohlraum des Ventilkolbens übergreifenden fest angeordneten Hülse geführt ist. Die Hülse weist dabei einen axialen Innenraum auf, der über vorzugsweise zueinander axial versetzte Öffnungen mit einem mit dem Pumpendruck beaufschlagten Raum innerhalb der Hauptstromdrossel in Verbindung steht und in den Innenraum des Ventilkolbens mündet. Durch dieses bewegbare Teil der Hauptstromdrossel wird in einfacher Weise eine staudruckabhängige Hauptstromdrossel geschaffen, die auf den Pumpenstrom reagiert und somit eine systemdruckunabhängige Einstellung des Ölstroms zu dem Verbraucher ermöglicht.

In bevorzugter Ausgestaltung der Ventilanordnung ist vorgesehen, daß der Ventilkolben einen konischen Endbereich besitzt, dessen Mantelfläche mit einer Kante eines Ventilrings ein Sitzventil bildet, so daß das Auftreten von Lecköl vermieden wird. Insbesondere ist es durch die Anordnung eines konischen Endbereiches an dem Ventilkolben in einfacher Weise möglich, den Ventilkolben durch eine Außenbearbeitung herzustellen. Da es sich bei dem Ventilkolben um ein rotationssymmetrisches Teil handelt, ist dies in einfacher Weise möglich. Besonders komplizierte Innenbearbeitungen an dem Ventilgehäuse, mit dem Ziel, eine möglichst hohe Dichtwirkung zu erreichen, können damit entfallen.

In bevorzugter Ausgestaltung der Ventilanordnung ist vorgesehen, daß der Ventilring durch eine axiale Verlängerung eines Stopfens mit integrierter Förderstromdrossel gebildet ist. Hiermit wird in einfacher Weise erreicht, daß das Gegenstück des Sitzventils gleichzeitig mit dem Stopfen gefertigt werden kann und beispielsweise als Einschraubpatrone in das Ventilgehäuse eingeschraubt werden kann.

In weiterer bevorzugter Ausgestaltung der Ventilanordnung ist vorgesehen, daß eine Innenfläche des Ventilringes mit der Mantelfläche des Ventilkolbens einen Ringraum bildet, wobei die Innenfläche und die Mantelfläche bevorzugt zueinander parallel oder winklig verlaufen können. Durch diese wahlweise Ausgestaltung der Innenfläche beziehungsweise der Mantelfläche wird erreicht, daß bei einer Öffnung des Sitzventils eine variable Außenkontur beziehungsweise Innenkontur des Ringraumes einstellbar ist, um damit zusätzlich zu der wegabhängigen Verstellung der Hauptstromdrossel eine weitere Kennlinienvariation der Ventilanordnung zu ermöglichen.

In weiterer bevorzugter Ausgestaltung der Ventilanordnung ist vorgesehen, daß der Ringraum in axialer Richtung einen veränderlichen Querschnitt aufweist. Hierdurch ist es in einfacher Weise sehr vorteilhaft möglich, je nach Öffnungsgrad des Ventilkolbens den Einströmwinkel, mit dem das Öl in den zu einem Bereich mit niedrigerem Druck führenden Kanal einströmt, zu beeinflussen.

Weitere vorteilhafte Ausgestaltungen der Erfindung ergeben sich aus den übrigen in den Unteransprüchen genannten Merkmalen.

Die Erfindung wird nachfolgend in Ausführungsbeispielen anhand der dazugehörigen Zeichnungen näher erläutert. Es zeigen:
- Figur 1: einen Längsschnitt durch eine Ventilanordnung in einer ersten Ausführung;
- Figur 2: einen Längsschnitt durch eine Ventilanordnung in einer zweiten Ausführung;
- Figur 3: das statische Verhalten einer Ventilanordnung gemäß den Figuren 1 und 2;
- Figur 4: einen Längsschnitt durch eine Ventilanordnung in einer dritten Ausführung;
- Figur 5: einen Längsschnitt durch eine Ventilanordnung in einer vierten Ausführung;
- Figur 6: das statische Verhalten einer Ventilanordnung gemäß den Figuren 4 und 5 und
- Figur 7: einen Längsschnitt durch eine Ventilanordnung in einer fünften Ausführung.

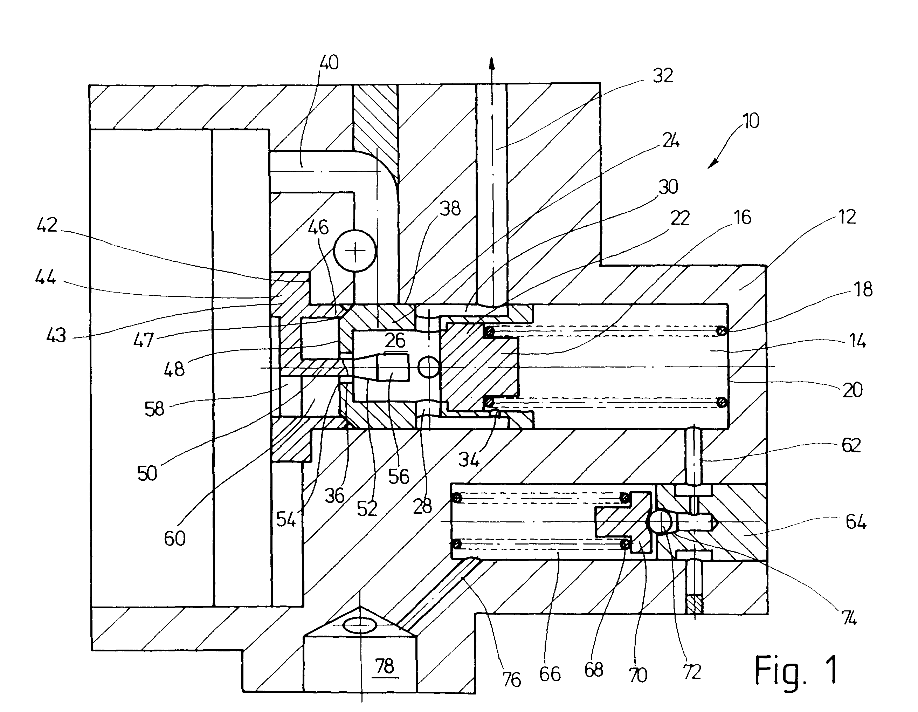

Figur 1 zeigt eine Ventilanordnung mit einem allgemein mit 10 bezeichneten Stromregelventil, die einen innerhalb eines Gehäuses 12 angeordneten axialen Innenraum 14 aufweist. In dem Innenraum 14 ist ein Ventilkolben 16 gegen die Kraft einer Feder 18 geführt. Die Feder 18 stützt sich dabei an einem Grund 20 des Innenraums 14 und an einem Bund 22 des Ventilkolbens 16 ab. Der Ventilkolben 16 besitzt einen Endbereich 24, innerhalb dessen ein Hohlraum 26 vorgesehen ist. Der Hohlraum 26 ist über Öffnungen 28 mit einem Ringraum 30 verbunden, von dem ein zu einem Verbraucher führender Kanal 32 abgeht. Der Ringraum 30 besitzt weiterhin eine durch den Ventilkolben 16 führende Öffnung 34, die in den die Feder 18 aufnehmenden Innenraum 14 führt. Der Bereich 24 des Ventilkolbens 16 besitzt weiterhin eine axiale Durchgangsöffnung 36. Der Endbereich 24 übergreift mit seiner Mantelfläche 38 einen in dem Gehäuse 12 angeordneten Kanal 40, der zu einem Ansaugbereich einer nicht dargestellten Pumpe führt. An dem pumpenseitigen Ende des Innenraums 14 ist in einem Sitz 42 eine Drosselhalterung 43 als Befestigungsträger für eine Hauptstromdrossel 44 angeordnet. Die Hauptstromdrossel 44 liegt über eine Ringschulter 46 an einer Stirnseite 48 des Bereiches 24 des Ventilkörpers 16 an. Die Ringschulter 46 und der Bereich 24 bilden dabei ein Sitzventil 47. Die Ringschulter 46 und die Stirnfläche 48 weisen Abschrägungen auf, wobei die Abschrägung des Ventilkolbens 16 im Bereich der Wandung des Innenraums 14 mit der Innenwandung des Kanals 40 fluchtet, so daß der Kanal 40 von der Mantelfläche 38 - auf einer freiwählbaren Länge - dichtend übergriffen wird, während gegenüber dem Innenraum 60 durch das Sitzventil 47 ein direkter Abschluß gegeben ist. Die Hauptstromdrossel 44 weist weiterhin eine axiale Verlängerung 50 auf, die durch die Durchgangsöffnung 36 des Endbereichs 24 des Ventilkolbens 16 durchgreift und innerhalb des Hohlraums 26 eine konische Erweiterung 52 besitzt. Der Durchmesser der Verlängerung 50 ist dabei geringer als der Durchmesser der Durchgangsöffnung 36, so daß sich dadurch ein Durchlaßspalt 54 ergibt, welcher die Drosselstelle für den Verbraucher darstellt. Die konische Erweiterung 52 der Verlängerung 50 erweitert sich so weit, daß ein Endbereich 56 gebildet ist, der einen größeren Durchmesser als die Durchgangsöffnung 36 aufweist. Die Hauptstromdrossel 44 besitzt weiterhin radial verlaufende Speichen 58, die einen Innenraum 60 von der Druckseite der Pumpe abtrennen. Die Speichen 58 dienen dabei zur Halterung der Verlängerung 50. Der Innenraum 60 wird durch die Stirnfläche 48 des Endbereichs 24 des Ventilkolbens 16 axial begrenzt.

Von dem Innenraum 14 geht weiterhin ein Kanal 62 ab, der zu einem Druckbegrenzungsventil 64 führt. Das Druckbegrenzungsventil 64 weist innerhalb eines axialen Innenraums 66 ein gegen die Kraft einer Feder 68 geführtes Stützelement 70 auf, das einen Schließkörper 72 in eine Aufnahme 74 drückt. Der Innenraum 66 ist über einen Kanal 76 mit einem Tankzulauf 78 verbunden.

Die in Figur 1 gezeigte Ventilanordnung übt folgende Funktion aus:

Bei Betrieb der nicht dargestellten Pumpe stellt sich innerhalb des Innenraums 60 ein bestimmter Öldruck ein, der durch den Durchlaßspalt 54 in dem Hohlraum 26 ebenfalls einen bestimmten Öldruck bewirkt. Die Abhängigkeit des Öldrucks in dem Innenraum 26 wird dabei bei Durchfluß zum Verbraucher durch die Wahl des Durchlaßspaltes 54 mitbestimmt, der dabei als Drossel wirkt. Über die Öffnungen 28 und den Ringraum 30 liegt dieser Öldruck auch in dem zu dem Verbraucher führenden Kanal 32 an und gewährleistet einen gleichmäßigen Ölstrom. Steigt nunmehr der Öldruck innerhalb des Innenraums 60 über ein bestimmtes Maß an, zum Beispiel bei Überschreiten einer Drehzahl von beispielsweise 1000 U/min⁻¹ oder bei Erreichen des gewünschten Ölstroms für den Verbraucher, öffnet das Sitzventil 47. Der Öldruck steht nunmehr an der Stirnfläche 48 des Endbereichs 24 des Ventilkolbens 16 an und drückt diesen gegen die Kraft der Feder 18 in den Innenraum 14 hinein, wodurch - wie erwähnt - das Sitzventil 47 öffnet. Durch diese axiale Verschiebung des Ventilkolbens 16 wird einerseits zwischen der Ringschulter 46 und der Stirnfläche 48 im Bereich der bereits erwähnten Abschrägungen ein Durchlaßspalt geöffnet, der eine Verbindung von dem Innenraum 60 zu dem Kanal 40 freigibt. Durch Öffnung dieser Verbindung wird der überschüssige Druck in dem Innenraum 60 begrenzt und das Öl über den Kanal 40 dem Ansaugbereich der Pumpe wieder zugeführt. Durch die axiale Bewegung des Ventilkolbens 16 wird gleichzeitig die Durchgangsöffnung 36 des Endbereichs 24 in Richtung der konischen Erweiterung 52, der Verlängerung 50 der Hauptstromdrossel 44, verschoben. Durch diese axiale Bewegung verringert sich der Querschnitt des Durchlaßspaltes 54, so daß durch diese Drosselfunktion gewährleistet ist, daß über den Kanal 32 der gewünschte Ölstrom reduziert zum Verbraucher fließen kann.

Im Leerlauf der nicht dargestellten Pumpe steigt der Öldruck in dem Innenraum 60 nicht so weit an, daß ein Verschieben des Ventilkolbens 16 erfolgen kann. Die Hauptstromdrossel befindet sich somit in maximaler Öffnungsstellung, das heißt, der Durchlaßspalt 54 besitzt seine größtmögliche Ringfläche, so daß sich zum an dem Kanal 32 angeschlossenen Verbraucher ein konstanter durch die Ringfläche des Durchlaßspalts sich ergebender (reduzierter) Volumenstrom einstellt. Da der Kanal 40 über das Sitzventil 47 von dem Innenraum 60 abgedichtet ist, kann hier kein Lecköl auftreten, so daß keine Beeinflussung einer Förderstromkennlinie der Ventilanordnung durch hier auftretendes Lecköl erfolgt.

Über die Öffnung 34 des Ventilkolbens 16 wird gleichzeitig gewährleistet, daß der Systemdruck ebenfalls in dem die Feder 18 aufnehmenden Innenraum 14 anliegt und damit über den Kanal 62 auf den Schließkörper 72 des Druckbegrenzungsventils 64 wirkt. Hiermit wird erreicht, daß, wenn der Systemdruck plötzlich sehr stark ansteigt, der Schließkörper 72 auf das Stützelement 70 drückt und dieses damit gegen die Kraft der Feder 68 in den Innenraum 66 hineindrückt und somit eine zusätzliche Verbindung über den Kanal 76 zu dem Tankzulauf 78 freigegeben wird. Durch diese zusätzliche Verbindung wird ein weiterer Druckanstieg vermieden und die Einhaltung des gewünschten maximalen Systemdrucks gewährleistet.

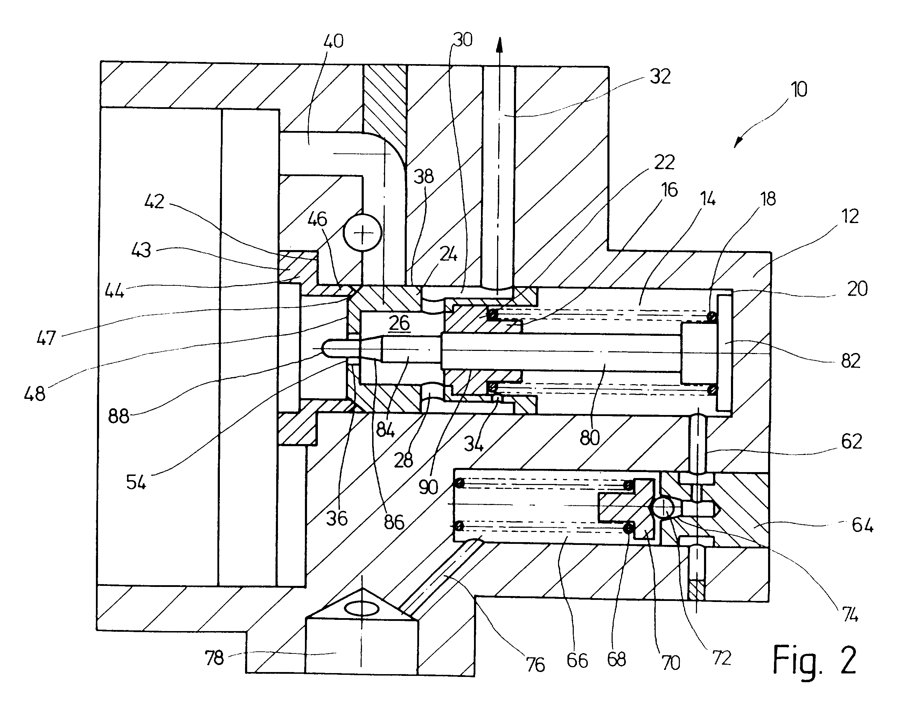

In Figur 2 ist eine weitere Ausführungsvariante einer Ventilanordnung gezeigt, wobei gleiche Teile wie in Figur 1 mit gleichen Bezugszeichen versehen sind und hier nicht nochmals erläutert werden.

Der Ventilkolben 16 besitzt einen feststehenden Kern 80, der über einen Bund 82 am Grund 20 des Innenraums 14 befestigt ist. Die Feder 18 stützt sich dabei auf dem Bund 82 und dem Bund 22 ab. Der Kern 80 geht innerhalb des Hohlraums 26 in einen durchmesserkleineren Bereich 84 über und weist eine zu der Durchgangsöffnung 36 weisende konische Verjüngung 86 auf, die zu einem durch die Durchgangsöffnung 36 durchgreifenden Endbereich 88 führt. Der Endbereich 88 besitzt dabei einen kleineren Durchmesser als die Durchgangsöffnung 36, so daß sich der Durchlaßspalt 54 ergibt. Der Ventilkolben 16 besitzt dabei eine dem Kern 80 angepaßte Öffnung 90 und ist auf diesem gegen die Kraft der Feder 18 verschiebbar gelagert.

Die in Figur 2 gezeigte Ventilanordnung übt die gleiche Funktion wie die bereits zu Figur 1 beschriebene aus.

Die Absenkung des Volumenstroms wird jedoch hier dadurch erreicht, daß über den auf die Stirnfläche 48 wirkenden Öldruck der Bereich 24 zu dem Kern 80, insbesondere zu der konischen Verjüngung 86, axial verschoben wird, so daß sich mit zunehmender axialer Verschiebung eine Verringerung des Durchlaßspaltes 54 einstellt. Die weitere Wirkungsweise ist wie bereits in Figur 1 beschrieben und wird hier nicht nochmals erwähnt.

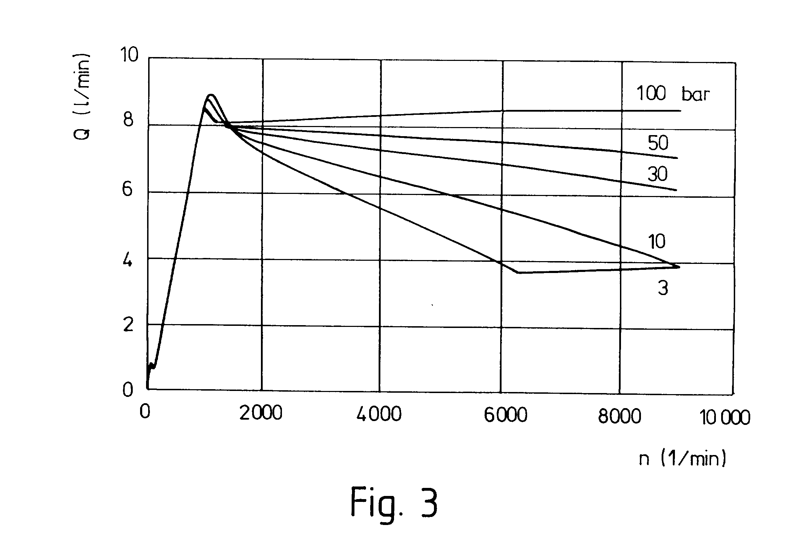

In der Figur 3 ist anhand eines Diagramms das statische Verhalten der in den Figuren 1 und 2 gezeigten Ventilanordnung mit wegabhängiger integrierter Hauptstromdrossel gezeigt. Es ist die Abhängigkeit des Volumenstroms in l/min von der Drehzahl n in U/min⁻¹ dargestellt. Es ist zu erkennen, daß bei hohen Drehzahlen, beispielsweise bei einem niedrigen Druck auf einer Autobahnfahrt, der Volumenstrom abgesenkt wird. Bei hohen Drücken, beispielsweise bei einem plötzlichen Reifenplatzen, bei dem ein hoher Lenkbedarf besteht, wird der Volumenstrom nicht abgesenkt. Damit wird klar, daß der Volumenstrom bei einer wegabhängigen Hauptstromdrossel auch vom Systemdruck abhängig ist.

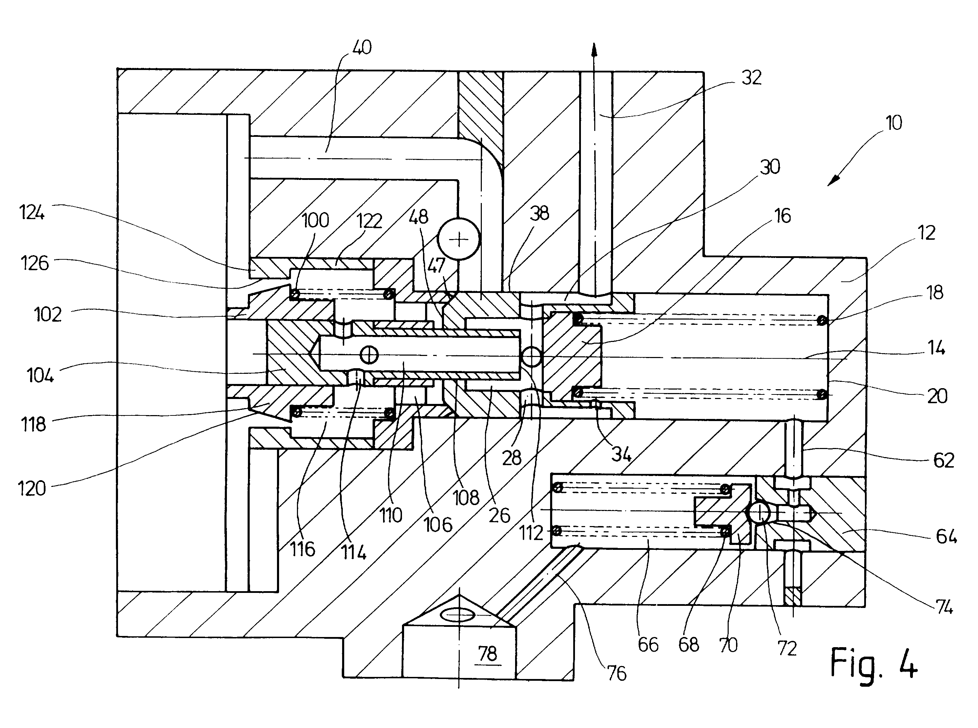

Bei dem in Figur 4 gezeigten Ausführungsbeispiel einer Ventilanordnung sind wiederum gleiche Teile wie in den Figuren 1 und 2 mit gleichen Bezugszeichen versehen.

Die Hauptstromdrossel 44 weist hier einen gegen die Kraft einer Feder 100 axial verschiebbaren Teil 102 auf. Das Teil 102 ist auf einer Hülse 104 geführt, die über ein Speichenrad 106 fest angeordnet ist. Die Hülse 104 ist durch eine Ausnehmung 108 des Endbereichs 24 des Ventilkolbens 16 dichtend in den Hohlraum 26 geführt. Die Hülse 104 besitzt einen sich axial erstreckenden Innenraum 110, der einerseits über eine Öffnung 112 mit dem Hohlraum 26 in Verbindung steht und der andererseits axial zueinander versetzt angeordnete Öffnungen 114 besitzt, die in einen mit der Druckseite der Pumpe in Verbindung stehenden Raum 116 führen. Das Teil 102 weist eine Ringschulter 118 auf, die einerseits als Gegenlager für die Feder 100 dient und andererseits eine sich pumpenseitig konisch erweiternde Ringfläche 120 aufweist. An dem Gehäuse 12 ist weiterhin eine feststehende Hülse 122 angeordnet, die einen Kragen 124 besitzt, dessen achsparallele Ringfläche 126 der konischen Ringfläche 120 gegenüberliegt.

Die in Figur 4 gezeigte Ventilanordnung übt folgende Funktion aus:

Der von der Pumpe ausgehende Öldruck wirkt auf das Teil 102 und drückt dieses bei Überschreiten eines bestimmten Wertes gegen die Kraft der Feder 100 axial über die Hülse 104. Durch diese axiale Bewegung des Teils 102 wird einerseits der sich zwischen den Ringflächen 120 und 126 ergebende Durchlaßspalt in den Raum 116 durch den konischen Verlauf der Ringfläche 118 vergrößert. Weiterhin schiebt sich das Teil 102 nacheinander über die versetzt angeordneten Öffnungen 114 und verringert damit die Eintrittsfläche zu dem Innenraum 110 der Hülse 104. Durch diese Verringerung der Eintrittsfläche wird gewährleistet, daß mit zunehmendem Pumpenstrom vor dem als Staudruckkegel bezeichneten Teil 102 sich ein zunehmender Staudruck einstellt und damit der Volumenstrom zum Verbraucher, das heißt zur Lenkung, reduziert wird. Durch den sich öffnenden Durchlaßspalt zwischen den Ringflächen 120 und 126 erhöht sich innerhalb des Raums 116 der Öldruck, der damit auf die Stirnfläche 48 des Ventilkolbens 16 drückt. Überschreitet dieser Druck einen bestimmten Wert, wird der Ventilkolben 16 gegen die Kraft der Feder 18 in den Innenraum 14 gedrückt und öffnet damit, wie bereits zu den Figuren 1 und 2 beschrieben, das Sitzventil 47 und gibt eine Verbindung zu dem Kanal 40 frei. Die weitere Wirkungsweise des in Figur 3 gezeigten Stromregelventils 10 ist die gleiche wie bereits die zu den Figuren 1 und 2 beschriebene.

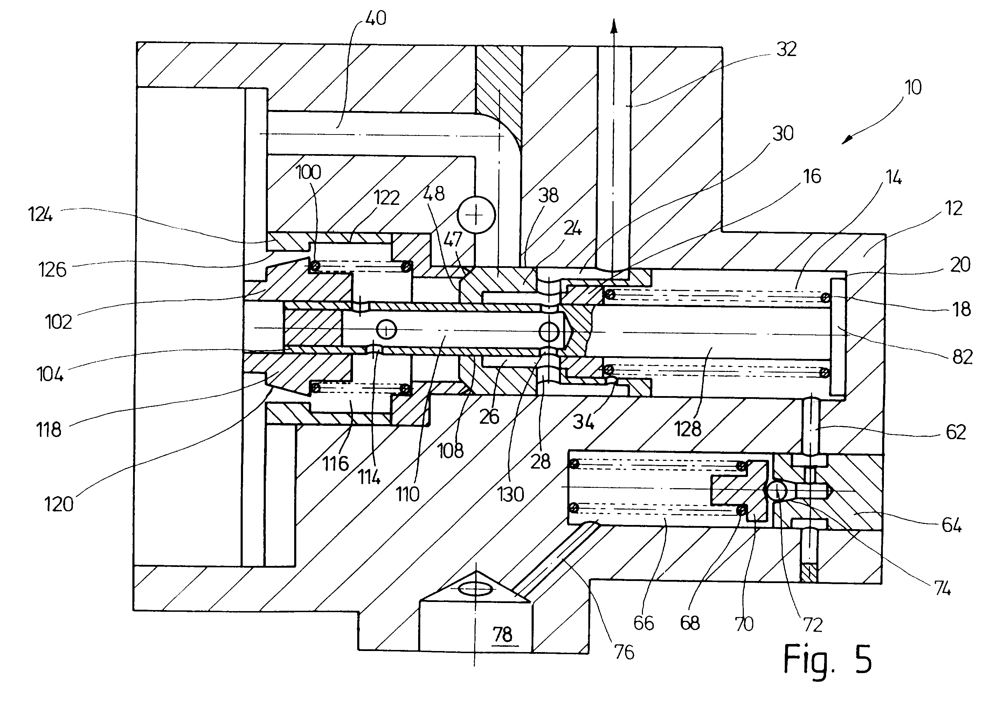

In Figur 5 ist eine vorteilhafte Ausgestaltung der in Figur 3 gezeigten Variante der Ventilanordnung gezeigt. Gleiche Teile sind wiederum mit gleichen Bezugszeichen bezeichnet.

Die Hülse 104 bildet hier mit einem durch den Ventilkolben 16 durchführenden Kern 128 ein gemeinsames Teil. Auf diesem Teil sind sowohl das Teil 102 als auch der Ventilkolben 16 gegen die Kraft der Federn 100 bzw. 18 axial verschiebbar gelagert. Der Innenraum 110 der Hülse 104 weist hier im Bereich des Hohlraums 26 Öffnungen 130 auf, die somit die Verbindung zwischen dem Raum 116 über den Innenraum 110 zu dem Hohlraum 26 und damit den Ringraum 30 beziehungsweise dem Kanal 32 herstellen. Zu der Funktion der in Figur 5 gezeigten Ventilanordnung 10 wird auf die bereits zu den Figuren 1, 2 und 4 gemachten Ausführungen verwiesen.

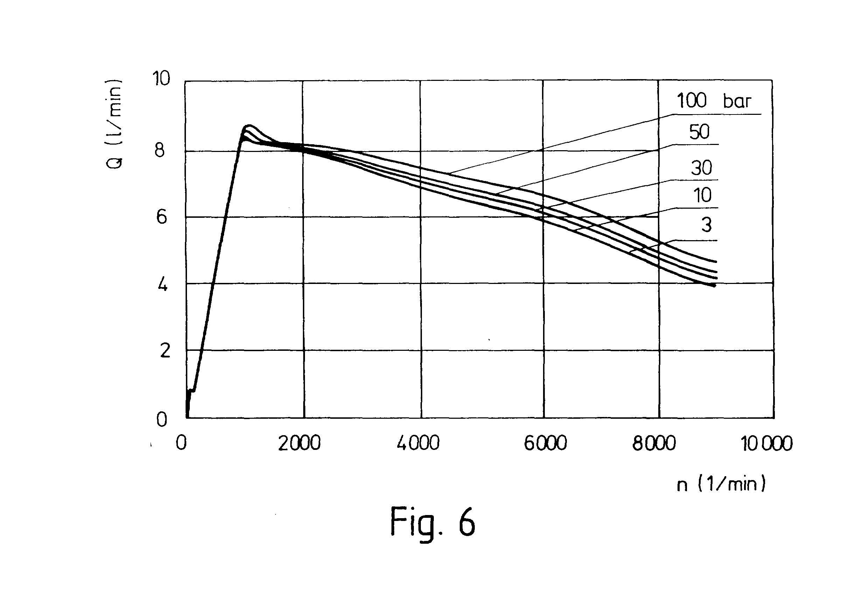

In der Figur 6 ist anhand eines Diagramms das statische Verhalten der in den Figuren 4 und 5 gezeigten Ventilanordnung mit einer staudruckabhängigen Hauptstromdrossel gezeigt. An der Kennlinie ist zu erkennen, daß im Gegensatz zu der in Figur 3 gezeigten Kennlinie, der Volumenstrom vom Systemdruck unabhängig ist und damit nur vom Pumpendruck, also dem Staudruck, abhängt. Eine plötzliche Änderung des Systemdrucks hat somit nur einen geringen Einfluß auf den Volumenstrom.

Insgesamt ist es mit den beispielhaft in den Figuren 1 bis 6 gezeigten Ventilanordnungen möglich, in dem den Ventilkolben aufnehmenden axialen Innenraum wahlweise weg- oder staudruckabhängige integrierte Hauptstromdrosseln vorzusehen. Dadurch, daß das Druckbegrenzungsventil außerhalb des Ventilkolbens liegt, wird insbesondere auch eine sichere Druckbegrenzungsfunktion bei höheren Öltemperaturen erreicht. Durch die Anordnung eines Sitzventils 47 am durch den Bereich 24 gebildeten Hauptschieber kann keine Leckage von der Pumpenseite zu den sogenannten Booster-Kanälen 40 auftreten, und die Nachteile eines Schieberventils werden vermieden. Lediglich zwischen dem Ringraum 30 und den Booster-Kanälen 40 besteht noch ein durch die Mantelfläche 38 und der Innenwandung des Innenraums 14 gebildetes Schieberventil, so daß nur aus einem Bereich eines bestimmten, in der Regel relativ niedrigen Volumenstroms eine minimale Leckage auftreten kann. Insgesamt weisen die beschriebenen Beispiele nur eine äußerst geringe Leckage auf, so daß durch entsprechende Dimensionierung der einzelnen beschriebenen Teile beliebige Durchflußkennlinien erzeugt werden können, die unabhängig von der Pumpendrehzahl einstellbar sind.

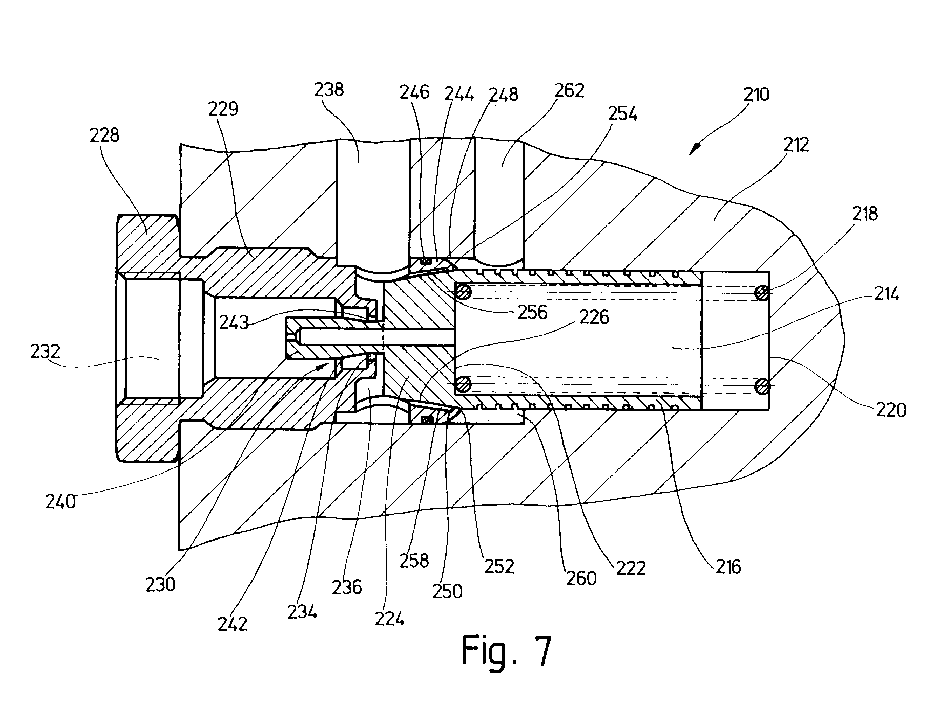

Die Figur 7 zeigt eine weitere Ventilanordnung mit einem allgemein mit 210 bezeichneten Stromregelventil, die einen innerhalb eines Gehäuses 212 angeordneten axialen Innenraum 214 aufweist. In dem Innenraum 214 ist ein Ventilkolben 216 gegen die Kraft einer Feder 218 geführt. Die Feder 218 stützt sich dabei an einem Grund 20 des Innenraums 214 und an einer Fläche 222 des Ventilkolbens 216 ab. Der Ventilkolben 16 besitzt einen konischen Endbereich 224. Eine Mantelfläche 226 des Endbereiches 224 verläuft dabei mit einem abnehmenden Durchmesser in Richtung der der Feder 218 abgewandten Seite des Ventilkolbens 216. Der Innenraum 214 ist durch einen Stopfen 228 verschlossen, der beispielsweise über ein Gewinde 229 befestigt ist. An den Stopfen 228 ist ein nicht dargestellter Verbraucher, beispielsweise ein Lenkgetriebe eines Kraftfahrzeuges, anschließbar. Der Stopfen 228 besitzt einen axialen Innenraum 232, der über eine Durchgangsöffnung 234 mit einem Ringraum 236 in Verbindung steht. Von dem Ringraum 236 führt ein erster Kanal 238 zu einem Druckbereich einer nicht dargestellten Pumpe. Die Durchgangsöffnung 234 wird durch eine axiale Verlängerung 240 des Ventilkolbens 216 durchgriffen. Die Verlängerung 240 besitzt innerhalb des Innenraumes 232 eine konische Erweiterung 242. Der Durchmesser der Verlängerung 240 ist dabei geringer als der Durchmesser der Durchgangsöffnung 234, so daß sich ein Durchlaßspalt 243 ergibt. Der Durchlaßspalt 243 bildet dabei eine Meßblende einer Hauptstromdrossel (Förderstromdrossel) 230. Der Stopfen 228 besitzt weiterhin eine einen Ventilring 244 bildende axiale Verlängerung, die den Bereich 224 des Ventilkolbens 216 übergreift. Der Ventilring 244 liegt über eine Dichtung 246 an einer Innenwandung 248 des Innenraumes 214 an. Der Ventilring 244 weist eine nach innen gerichtete Ringschulter 250 auf, die mit einer Kante 252 an der Mantelfläche 226 des Ventilkolbens 216 anliegt. Die Kante 252 bildet dabei mit der Mantelfläche 226 ein Sitzventil 254. Zwischen der Mantelfläche 226 und einer Innenfläche 256 des Ventilringes 244 ist ein Ringraum 258 gebildet. Im gezeigten Beispiel verlaufen die Innenfläche 256 und die Mantelfläche 226 beispielsweise parallel zueinander. Ein weiterer im Bereich des Ventilkolbens 216 angeordneter Ringraum 260 ist mit einem Kanal 262 verbunden, der zu einem Bereich niederen Drucks, beispielsweise dem Tank einer Lenkhilfpumpe, führt.

Die in der Figur 7 gezeigte Ventilanordnung übt folgende Funktion aus:

Bei Betrieb des nicht dargestellten Lenkgetriebes stellt sich innerhalb des Ringraums 236 ein bestimmter Öldruck ein. In dem Innenraum 232 stellt sich ebenfalls ein Druck ein, wobei ein Differenzdruck durch die Größe der Meßblende 243 beeinflußt wird. Der Differenzdruck wirkt auf den Ventilkolben 216, so daß dieser gegen die Kraft der Feder 218 in den Innenraum 214 axial verschoben wird. Durch diese axiale Verschiebung des Ventilkolbens 16 wird dessen Mantelfläche 226 ebenfalls verschoben, so daß sich zwischen der Kante 252 und der Mantelfläche 226 ein Durchlaßspalt ergibt und das Sitzventil 254 hierdurch öffnet. Durch Wahl der Konizität der Mantelfläche 226 ist eine zusätzliche wegabhängige Kennlinienbeeinflussung des Volumenstromes möglich. Durch eine variable Gestaltung des Durchmessers der Mantelfläche 226 kann bei einem unterschiedlichen Öffnungsgrad des Ventilkolbens 216 der Öffnungsquerschnitt, der sich durch die Bewegung des Ventilkolbens 216 ergibt, beeinflußt werden. Hierdurch ergeben sich eine Vielzahl von Kennlinienvariationen, die durch eine einfache Außenbearbeitung der konischen Mantelfläche 226 des Ventilkolbens 216 herstellbar sind. Es kann bei entsprechender Ausgestaltung der Innenfläche 256 die Strömungskraft beeinflußt, das heißt, reduziert werden. Insgesamt ergeben sich dadurch in einfacher Weise vielfältige Kennlinienvariationen, die neben einer Kennlinienbeeinflussung durch die Hauptstromdrossel 230 zu unabhängig von der Pumpendrehzahl einstellbaren Durchflußkennlinien führen.

Durch die in Figur 7 gezeigte Ventilanordnung wird ebenfalls das Auftreten von Lecköl im Leerlauf weitgehend vermieden, da das Sitzventil 254 für eine Abdichtung des Ringraums 236 zu dem Kanal 262 sorgt. Ein durch die Hauptstromdrossel 230 reduzierter Volumenstrom kann somit weitgehend verlustfrei aufrechterhalten werden.

## Patentansprüche

1. Ventilanordnung mit einem Stromregelventil (10), das einen gegen die Kraft einer Feder (18, 218) in einem axialen Innenraum (14,214) verschiebbar geführten Ventilkolben (16,216) aufweist und einer einen Volumenstrom zu einem hydraulischen Verbraucher beeinflussenden Hauptstromdrossel (44,230), **dadurch gekennzeichnet**, daß der Ventilkolben (16, 216) einen Endbereich (24, 224) aufweist, der einerseits einen von dem Innenraum (14, 214) abgehenden, zu einem Ansaugbereich einer hydraulischen Fördereinrichtung führenden Kanal (40, 262) übergreift und der andererseits ein Sitzventil (47, 254) zur Abdichtung des Kanals (40, 262) ausbildet.

2. Ventilanordnung nach Anspruch 1, **dadurch gekennzeichnet**, daß der Ventilkolben (16) innerhalb des Endbereichs (24) einen Hohlraum (26) aufweist, der über wenigstens eine Öffnung (28) mit einem Ringraum (30) in Verbindung steht, von dem ein Kanal (32) zu einem Verbraucher führt.

3. Ventilanordnung nach einem der vorhergehenden Ansprüche, **dadurch gekennzeichnet**, daß der Endbereich (24) eine axiale Durchgangsöffnung (36) aufweist, durch die eine axiale Verlängerung (50) der Hauptstromdrossel (44) greift.

4. Ventilanordnung nach den Ansprüchen 2 und 3, **dadurch gekennzeichnet,** daß die Verlängerung (50) eine konische Erweiterung (52) besitzt, die innerhalb des Hohlraums (26) angeordnet ist.

5. Ventilanordnung nach einem der vorhergehenden Ansprüche 2 bis 4, **dadurch gekennzeichnet**, daß der Ringraum (30) wenigstens eine Öffnung (34) zu dem Innenraum (14) besitzt, der über einen Kanal (62) mit einem Druckbegrenzungsventil (64) in Verbindung steht.

6. Ventilanordnung nach einem der vorhergehenden Ansprüche, **dadurch gekennzeichnet**, daß Hauptstromdrossel (44) fest in dem Innenraum (14) angeordnet ist und einen über Durchlässe mit der Druckseite der Pumpe in Verbindung stehenden Raum (60) aufweist, der durch eine Stirnfläche (48) des Ventilkolbens (16) axial begrenzt wird.

7. Ventilanordnung nach Anspruch 2 und einem der vorhergehenden Ansprüche 5 oder 6, **dadurch gekennzeichnet**, daß der Ventilkolben (16) einen feststehenden Kern (80) aufweist, der eine durch den Hohlraum (26) und durch eine im Endbereich des Kolbens vorhandene Durchgangsöffnung (36) greifende Verlängerung (84) besitzt.

8. Ventilanordnung nach Anspruch 7, **dadurch gekennzeichnet,** daß die Verlängerung (84) einen sich zu der Durchgangsöffnung (36) konisch verjüngenden Bereich (86) aufweist.

9. Ventilanordnung nach einem der vorherehenden Ansprüche, **dadurch gekennzeichnet,** daß die Hauptstromdrossel (44) ein gegen die Kraft einer Feder (100) axial bewegbares Teil (102) besitzt, das auf einer die Hauptstromdrossel (44) und den Hohlraum (26) übergreifenden, fest angeordneten Hülse (104) geführt ist.

10. Ventilanordnung nach den Ansprüchen 2 und 9, **dadurch gekennzeichnet**, daß die Hülse (104) einen axialen Innenraum (110) aufweist, der über wenigstens eine, vorzugsweise mehrere zueinander axial versetzte Öffnungen (114) mit einem Raum (116) in Verbindung steht und in den Hohlraum (26) mündet.

11. Ventilanordnung nach einem der vorhergehenden Ansprüche 9 oder 10, **dadurch gekennzeichnet,** daß das Teil (102) eine Ringschulter (118) aufweist, die eine sich konisch erweiternde Ringfläche (120) besitzt, die einer achsparallelen Ringfläche (126) einer feststehenden Hülse (122) gegenüberliegt.

12. Ventilanordnung nach Anspruch 2 und einem der vorhergehenden Ansprüche 9 bis 11, **dadurch gekennzeichnet,** daß die Hülse (104) durch den Ventilkolben (16) hindurchgeführt ist, sich am Grund 20 des Innenraums (14) abstützt und im Bereich des Hohlraums (26) wenigstens eine Öffnung (130) besitzt.

13. Ventilanordnung nach einem der vorhergehenden Ansprüche, 9 bis 12, **dadurch gekennzeichnet,** daß der Ventilkolben (16) und der bewegliche Teil (102) der Hauptstromdrossel (44) gemeinsam auf der Hülse (104) axial verschiebbar geführt sind.

14. Ventilanordnung nach Anspruch 1, **dadurch gekennzeichnet,** daß der Ventilkolben (216) einen konischen Endbereich (224) besitzt, dessen Mantelfläche (226) mit einer Kante (252) eines Ventilringes (244) ein Sitzventil (254) bildet.

15. Ventilanordnung nach Anspruch 14, **dadurch gekennzeichnet,** daß der Ventilring (244) durch eine axiale Verlängerung eines Stopfens (228) mit integrierter Förderstromdrossel (230) gebildet ist.

16. Ventilanordnung nach einem der Ansprüche 14 bis 15, **dadurch gekennzeichnet,** daß die Kante (252) durch eine radial nach innen gerichtete Ringschulter (250) gebildet ist.

17. Ventilanordnung nach einem der Ansprüche 14 bis 16, **dadurch gekennzeichnet,** daß eine Innenfläche (256) des Ventilringes (244) mit der Mantelfläche (226) einen Ringraum (258) bildet.

18. Ventilanordnung nach Anspruch 17, **dadurch gekennzeichnet,** daß die Innenfläche (256) und die Mantelfläche (226) zueinander parallel verlaufen.

19. Ventilanordnung nach Anspruch 17, **dadurch gekennzeichnet,** daß die Innenfläche (256) und die Mantelfläche (226) zueinander winklig verlaufen.

20. Ventilanordnung nach einem der Ansprüche 17 bis 19, **dadurch gekennzeichnet,** daß der Ringraum (258) in axialer Richtung einen veränderlichen Querschnitt aufweist.

21. Ventilanordnung nach Anspruch 20, **dadurch gekennzeichnet**, daß der veränderliche Querschnitt durch einen sich ändernden Durchmesser der Innenfläche (256) bestimmt wird.

22. Ventilanordnung nach Anspruch 20, **dadurch gekennzeichnet**, daß der veränderliche Querschnitt durch einen sich ändernden Durchmesser der Mantelfläche (226) bestimmt wird.

## Claims

1. A valve arrangement with a flow-regulating valve (10), which comprises a valve piston (16, 216) displaceably guided against the force of a spring (18, 218) in an axial inner space (14, 214), and a main flow throttle (44, 230) controlling a volume flow to an hydraulic consumer means, **characterized in that** the valve piston (16, 216) has an end region (24, 224) which on one side engages over a duct (40, 262) starting from the inner space (14, 214) and leading to an intake region of an hydraulic conveying device and which on the other side forms a seat valve (47, 254) for sealing off the duct (40, 262).

2. A valve arrangement according to Claim 1, **characterized in that** inside the end region (24) the valve piston (16) is provided with a cavity (26) which is connected by way of at least one opening (28) to an annular space (30) from which a duct (32) leads to a consumer means.

3. A valve arrangement according to one of the preceding Claims, **characterized in that** the end region (24) has an axial through opening (36) through which an axial extension (50) of the main flow throttle (44) engages.

4. A valve arrangement according to Claims 2 and 3, **characterized in that** the extension (50) has a conical enlargement (52) which is arranged inside the cavity (26).

5. A valve arrangement according to one of the preceding Claims 2 to 4, **characterized in that** the annular space (30) has at least one opening (34) to the inner space (14) which is connected by, way of a duct (62) to a pressure-control valve (64).

6. A valve arrangement according to one of the preceding Claims, **characterized in that** the main flow throttle (44) is arranged fixed in the inner space (14) and has a space (60) which is connected by way of passages to the pressure side of the pump and which is bounded axially by a front face (48) of the valve piston (16).

7. A valve arrangement according to Claim 2 and one of the preceding Claims 5 or 6, **characterized in that** the valve piston (16) has a stationary core (80) which has an extension (84) engaging through the cavity (26) and through a through opening (36) provided in the end region of the piston.

8. A valve arrangement according to Claim 7, **characterized in that** the extension (84) has a region (86) tapering in a conical manner towards the through opening (36).

9. A valve arrangement according to one of the preceding Claims, **characterized in that** the main flow throttle (44) has a part (102) which is movable axially against the force of a spring (100) and which is guided on a sleeve (104) arranged in a fixed manner and engaging over the main flow throttle (44) and the cavity (26).

10. A valve arrangement according to Claims 2 and 9, **characterized in that** the sleeve (104) has an axial inner space (110) which is connected to a space (116) by way of at least one opening (114) and preferably a plurality of openings (114) offset axially from one another and which opens into the cavity (26).

11. A valve arrangement according to one of the preceding Claims 9 or 10, **characterized in that** the part (102) has an annular shoulder (118) which has an annular face (12) which is enlarged in a conical manner and which is opposite an axially parallel annular face (126) of a stationary sleeve (122).

12. A valve arrangement according to Claim 2 and one of the preceding Claims 9 to 11, **characterized in that** the sleeve (104) passes through the valve piston (16), is supported on the base (20) of the inner space (14) and has at least one opening (130) in the region of the cavity (26).

13. A valve arrangement according to one of the preceding Claims 9 to 12, **characterized in that** the valve piston (16) and the movable part (102) of the main flow throttle (44) are guided jointly on the sleeve (104) in an axially displaceable manner.

14. A valve arrangement according to Claim 1, **characterized in that** the valve piston (16) has a conical end region (224), the outer face (226) of which forms a seat valve (254) with an edge (252) of a valve ring (244).

15. A valve arrangement according to Claim 14, **characterized in that** the valve ring (244) is formed by an axial extension of a plug (228) with an integrated supply-flow throttle (230).

16. A valve arrangement according to one of Claims 14 to 15 *[sic],* **characterized in that** the edge (252) is formed by an annular shoulder (250) directed radially inwards.

17. A valve arrangement according to one of Claims 14 to 16, **characterized in that** an inner face (256) of the valve ring (244) forms an annular space (258) with the outer face (226).

18. A valve arrangement according to Claim 17, **characterized in that** the inner face (256) and the outer face (226) extend parallel to each other.

19. A valve arrangement according to Claim 17, **characterized in that** the inner face (256) and the outer face (226) extend at an angle to each other.

20. A valve arrangement according to one of Claims 17 to 19, **characterized in that** the annular space (258) has a variable cross-section in the axial direction.

21. A valve arrangement according to Claim 20, **characterized in that** the variable cross-section is determined by a varying diameter of the inner face (256).

22. A valve arrangement according to Claim 20, **characterized in that** the variable cross-section is determined by a varying diameter of the outer face (226).

## Revendications

1. Arrangement de soupape ayant une soupape de réglage de flux (10), qui comprend un piston de soupape (16, 216) guidé par coulissement contre la force d'un ressort (18, 218) dans une chambre intérieure (14, 214) axiale et ayant un étranglement du courant principal (44, 230) influençant un courant volumique vers un utilisateur hydraulique,
caractérisé en ce que
le piston de soupape (16, 216) comporte une zone terminale (24, 224), qui d'une part passe sur un canal (40, 262) partant de la chambre intérieure (14, 214), conduisant à une zone d'aspiration d'un dispositif de transport hydraulique et qui d'autre part constitue une soupape à siège (47, 254) pour l'étanchéité du canal (40, 262).

2. Arrangement de soupape selon la revendication 1,
caractérisé en ce que
le piston de soupape (16) comporte à l'intérieur de la zone d'extrémité (24) un espace creux (26), qui est en liaison par au moins une ouverture (28) avec un espace annulaire (30), à partir duquel un canal (32) même à un utilisateur.

3. Arrangement de soupape selon une des revendications précédentes,
caractérisé en ce que
la zone terminale (24) comporte une ouverture de passage axiale (36), à travers laquelle passe un prolongement axial (50) de l'étranglement de courant principal (44).

4. Arrangement de soupape selon les revendications 2 et 3,
caractérisé en ce que
le prolongement (50) possède un élargissement conique (52), qui est disposé à l'intérieur de l'espace creux (26).

5. Arrangement de soupape selon une des revendications précédentes 2 à 4,
caractérisé en ce que
l'espace annulaire (30) possède au moins une ouverture (34) vers la chambre intérieure (14), qui est en liaison par un canal (62) avec une soupape de limitation de pression (64) par l'intermédiaire d'un canal (62).

6. Arrangement de soupape selon une des revendications précédentes,
caractérisé en ce que
l'étranglement de courant principal (44) est disposé fixement dans la chambre intérieure (14) et comporte un espace (60) se trouvant en liaison par des passages avec le côté pression de la pompe, espace (60) qui est limité axialement par une surface frontale (48) du piston à soupape (16).

7. Arrangement de soupape selon la revendication 2 et une des revendications 5 ou 6,
caractérisé en ce que
le piston à soupape (16) comporte un noyau central rigide (80), qui possède un prolongement (84) passant à travers l'espace creux (26) et à travers une ouverture de passage (36) existant dans la zone d'extrémité du piston.

8. Arrangement de soupape selon la revendication 7,
caractérisé en ce que
le prolongement (84) comporte une zone (86) s'amincissant coniquement vers l'ouverture de passage (36).

9. Arrangement de soupape selon une des revendications précédentes,
caractérisée en ce que
l'étranglement de courant principal (44) possède une pièce (102) mobile axialement contre la force d'un ressort (100), pièce (102) qui est guidée sur un manchon (104) placé de manière fixe et passant au-dessus de l'étranglement de courant principal (44) et de l'espace creux (26).

10. Arrangement de soupape selon les revendications 2 à 9,
caractérisé en ce que
le manchon (104) comporte une chambre intérieure axiale (110), qui est en liaison avec un espace (116) par au moins une, de préférence plusieurs ouvertures (114) décalées axialement les unes par rapport aux autres et il débouche dans l'espace creux (26).

11. Arrangement de soupape selon une des revendications précédentes 9 ou 10,
caractérisé en ce que
la pièce (102) comporte un épaulement annulaire (118), qui possède une surface annulaire (120) s'évasant coniquement, qui fait face à une surface annulaire (126) d'axe parallèle d'un manchon fixe (122).

12. Arrangement de soupape selon une des revendications précédentes 9 à 11,
caractérisé en ce que
le manchon (104) est guidé par le piston à soupape (16), il s'appuie sur la base (20) de la chambre intérieure (14) et possède au moins une ouverture (130) dans la zone de l'espace creux (26).

13. Arrangement de soupape selon une des revendications précédentes 9 à 12,
caractérisé en ce que
le piston à soupape (16) et la pièce mobile (102) de l'étranglement de courant principal (44) sont guidés en commun en pouvant coulisser axialement sur le manchon (104).

14. Arrangement de soupape selon la revendication 1,
caractérisé en ce que
le piston à soupape (216) possède une zone d'extrémité conique (224), dont la surface enveloppe (226) forme avec une arête (252) d'un anneau de soupape (244) une soupape à siège (254).

15. Arrangement de soupape selon la revendication 14,
caractérisé en ce que
l'anneau de soupape (244) est formé par un prolongement axial d'un tampon (228) avec l'étranglement du courant d'amenée (230) intégré.

16. Arrangement de soupape selon une des revendications 14 à 15,
caractérisé en ce que
l'arête (252) est formée par un épaulement annulaire (250) dirigé radialement vers l'intérieur.

17. Arrangement de soupape selon une des revendications 14 à 16,
caractérisé en ce qu'
une surface intérieure (256) de l'anneau de soupape (244) forme avec la surface enveloppe (226) un espace annulaire (258).

18. Arrangement de soupape selon la revendication 17,
caractérisé en ce que
la surface intérieure (256) et la surface enveloppe (226) se développent parallèlement l'une à l'autre.

19. Arrangement de soupape selon la revendication 17,
caractérisé en ce que
la surface intérieure (256) et la surface enveloppe (226) se développent de manière angulaire l'une par rapport à l'autre.

20. Arrangement de soupape selon une des revendications 17 à 19,
caractérisé en ce que
l'espace annulaire (258) comporte dans le sens axial une section transversale variable.

21. Arrangement de soupape selon la revendication 20,
caractérisé en ce que
la section transversale variable est déterminée par un diamètre de la surface interne (256) variant.

22. Arrangement de soupape selon la revendication 20,
caractérisé en ce que
la section transversale variable est déterminée par un diamètre de la surface enveloppe (226) variant.
